## Europäisches Patentamt

## European Patent Office

## Office européen des brevets

(19)

(11) Veröffentlichungsnummer: **0 114 623**
**B1**

(12) **EUROPÄISCHE PATENTSCHRIFT**

(45) Veröffentlichungstag der Patentschrift:
15.10.86

(51) Int. Cl.⁴: **B 62 K 25/08,** F 16 F 9/48

(21) Anmeldenummer: **84100295.9**

(22) Anmeldetag: **12.01.84**

(54) Hydraulischer Teleskopstossdämpfer für ein Kraftfahrzeug, insbesondere für ein Motorrad.

(30) Priorität: **20.01.83 DE 3301707**

(43) Veröffentlichungstag der Anmeldung:
**01.08.84 Patentblatt 84/31**

(45) Bekanntmachung des Hinweises auf die Patenterteilung:
**15.10.86 Patentblatt 86/42**

(84) Benannte Vertragsstaaten:
**DE FR GB IT**

(56) Entgegenhaltungen:
**DE-A-1 755 711**
**DE-C-390 288**
**DE-U-7 535 393**
**DE-U-8 016 907**
**FR-A-1 467 167**
**FR-A-2 173 343**

(73) Patentinhaber: **BAYERISCHE MOTOREN WERKE Aktiengesellschaft, Postfach 40 02 40 Petuelring 130, D-8000 München 40 (DE)**

(72) Erfinder: **Saghafi, Mehrdad, Eichenstrasse 1, D-8028 Taufkirchen (DE)**

(74) Vertreter: **Dexheimer, Rolf, Bayerische Motoren Werke Aktiengesellschaft Postfach 40 02 40 Petuelring 130 - AJ- 31, D-8000 München 40 (DE)**

## Beschreibung

Die Erfindung bezieht sich auf einen hydraulischen Teleskopstoßdämpfer der im Oberbegriff des Patentanspruchs genannten Art, welche aus der DE-A-17 55 711 hervorgeht.

Bei dem bekannten hydraulischen Teleskopstoßdämpfer ist die Abdeckung als ein Ringelement ausgebildet, daß am freien Ende einer ihrerseits am Boden des äußeren Zylinders befestigten und die Kolbenstange umgebenden Druckfeder angebracht ist. Ab einem bestimmten Einfederungshub des inneren Zylinders wird das Ringelement durch den Dämpfungseinsatz verschoben und überdeckt schließlich ganz oder teilweise die in einer Radialebene liegenden Queröffnungen. Durch die erläuterte Anordnung des Ringelements müssen sich bis zum Ansprechen seiner Dämpfungswirkung die beiden Zylinder relativ weit ineinanderschieben, so daß das Ringelement zusätzlich zur Dämpfungswirkung des Dämpfungseinsatzes als eine wegabhängige Dämpfung wirkt.

Ferner ist in der DE-C-27 57 711 ein hydraulischer Teleskopstoßdämpfer offenbart, bei dem in der Druckstufe die Dämpfungskarakteristik mittels einer außen am Teleskopstoßdämpfer zugänglichen Verstelleinrichtung veränderbar ist. Diese besteht aus einer im Hohlraum der Kolbenstange angeordneten und über ein Gewinde längsbewegbaren Regelstange, die bis in den Bereich von in der Kolbenstange hintereinanderliegend angeordneten Querbohrungen ragt und dort eine gegen Federwirkung verschiebbare Steuerbuchse trägt. Die Verstelleinrichtung muß jedoch für einen optimalen Funktionseinsatz jeweils manuell eingestellt werden.

Aufgabe der Erfindung ist es daher, einen hydraulischen Teleskopstoßdämpfer der eingangs genannten Gattung mit geringstem Bauaufwand derart auszubilden, daß die Größe des Durchflußquerschnitts der Queröffnung in der Druckstufe lastabhängig selbsttätig veränderbar ist.

Zur Lösung der Aufgabe sind die im kennzeichnenden Teil des Patentanspruchs 1 dargelegten Gestaltungsmerkmale vorgesehen.

Da die starr mit dem äußeren Zylinder verbundene Abdeckung sich an dem dessen Boden zugewandten Randbereich der Queröffnung befindet und die Kolbenstange über ein Federelement am Boden des äußeren Zylinders auТliegt, kann die Kolbenstange durch die im inneren Zylinder angeordnete Druckfeder entsprechend der jeweiligen Größe der Fahrzeugbelastung, oder wenn das Motorrad eine Fahrbahnerhöhung überfährt, zum Boden des äußeren Zylinders hin verlagert werden. Hierdurch wird der Durchflußquerschnitt der Queröffnung proportional zur erhöhten Motorradbelastung verkleinert, so daß der Teleskopstoßdämpfer entsprechend dem Einschubweg des äußeren Zylinders, zusätzlich zum vorhandenen Dämpfungseinsatz, in der Druckstufe eine lastabhängige Dämpfung hat. Das durch das vorgesehene Federelement mögliche Einfedern der Kolbenstange in der Druckstufe trägt geringfügig auch zur Verbesserung des Fahrkomforts bei, denn durch die größere Vorspannung des Federelements wird eine weiche Dämpfungswirkung im hydraulischen Teleskopstoßdämpfer erzeugt.

Durch Ausbildung der Queröffnung als ein Langloch (Merkmal des Patentanspruchs 2) kann das Federelement einen großen Federweg haben.

Die Befestigung der Kolbenstange am Boden des äußeren Zylinders über ein topfförmiges Aufnahmeteil (Merkmal der Patentansprüche 3 und 4) ermöglicht nicht nur eine einfache Montage der Kolbenstange, sondern auch in besonders einfacher Weise das Anordnen von TellerfedeNn oder dgl. Druckfeder. Bei Ausbildung eines Führungsbunds am freien Endabschnitt der Kolbenstange ist beim Zusammenwirken des Führungsbunds mit der Kappe des Aufnahmeteils unkompliziert eine Totgangverbindung geschaffen, wobei gleichzeitig die Kappe als Abdeckung wirkt.

Ein Ausführungsbeispiel der Erfindung ist in der einen Längsschnitt des hydraulischen Teleskopstoßdämpfer veranschaulichenden Zeichnung dargestellt und wird im folgenden erläutert.

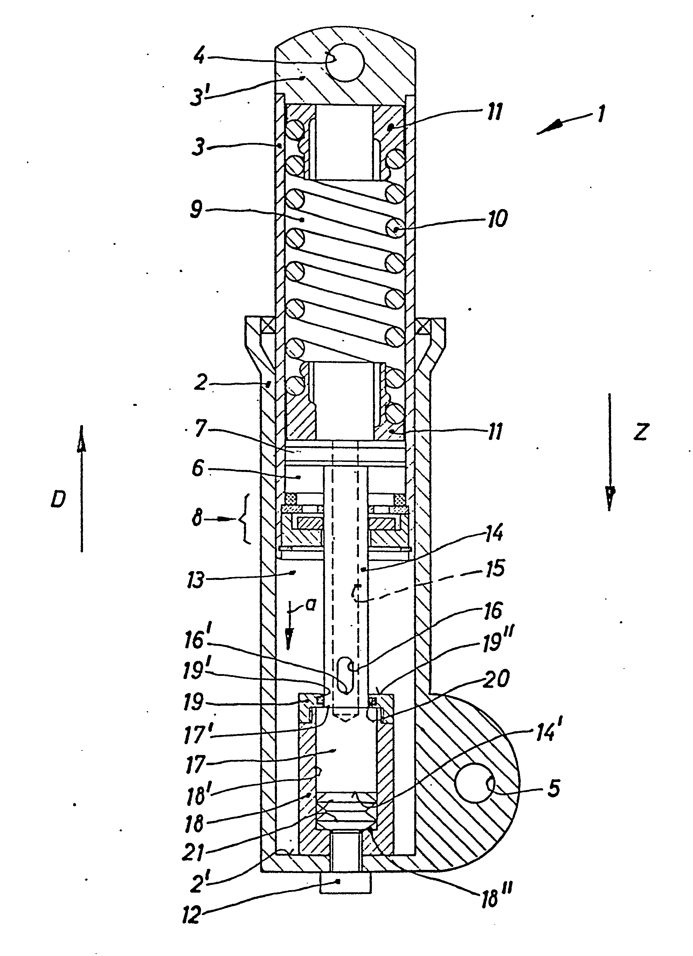

Wie in der Zeichnung ersichtlich, besteht der hydraulische, zum Einbau in die Gabel eines Motorrads vorgesehene Teleskopstoßdämpfer 1 aus einem äußeren Zylinder 2 und einem inneren Zylinder 3, der mit einer obenliegenden Befestigungsbohrung 4 versehen ist, während der äußere Zylinder 2 eine untenliegende Befestigungsbohrung 5 aufweist. Der innere Zylinder 3 hat einen Arbeitsraum 6, der einerseits von einem Kolben 7 und andererseits von einem am unteren Endabschnitt des Zylinders 3 vorgesehenen Dämpfungseinsatz 8 begrenzt ist. In einer Federkammer 9 des inneren Zylinders 3 ist eine sich einerseits an dessen Deckel 3' und andererseits am Kolben 7 abstützenden Druckfeder 10 angeordnet, gegen deren Wirkung der äußere Zylinder 2 und der innere Zylinder 3 ineinander schiebbar sind; dabei liegt die Druckfeder 10 unter Zwischenlage einer Federendaufnahme 11 am Deckel 3' bzw. an Kolben 7 an. Die im Arbeitsraum 13 des äußeren Zylinders 2 angeordnete Kolbenstange 14 des Kolbens 7 weist einen axial verlaufenden, sich bis nahe zu ihrem freien, untenliegenden Endabschnitt erstreckenden und als ein Sackloch ausgebildeten Hohlraum 15 auf, in den nahe seines Bodens eine im Bereich des freien Endabschnitts der Kolbenstange 14 liegende Queröffnung 16 einmündet. Diese ist als ein sich in der Längsrichtung der Kolbenstange 14 erstreckendes Langloch ausgebildet, das die Kolbenstange 14 entweder ganz oder nur eine den Hohlraum 15 umgebende Wand durchsetzt.

Ferner ist am freien Endabschnitt der

2

Kolbenstange 14 ein radial gerichteter Führungsbund 17 ausgebildet, der im zylindrischen Hohlraum 16' eines am Boden 2' des äußeren Zylinders 2 mittels einer Schraube 12 befestigten, topfförmigen Aufnahmeteils 18 längsverschiebbar angeordnet ist. Auf dieses ist eine Kappe 19 aufgeschraubt, deren zentrische Durchgangsöffnung 19' mit einer Dichtung 20 versehen ist, welche die Kolbenstange 14 flüssigkeitsdicht umgibt; wie im folgenden erläutert wird, erfüllt die Kappe 19 gegenüber der Queröffnung 16 die Funktion einer Abdeckung. Auf dem Boden 18'' des topfförmigen Aufnahmeteil 18 liegt ein aus Tellerfedern, einer Schraubendruckfeder oder dgl. bestehendes Federelement 21 auf, das mit Vorspannung gegen die freie Stirnseite 14' der Kolbenstange 14 wirkt; dabei ist die Längserstreckung des Führungsbunds 17 derart bemessen, daß seine dem Kolben 7 zugewandte Anlageschulter 17' gegen die Kappe 19 gedrückt wird. Hierbei befindet sich der dieser zugewandte, untenliegende Randabschnitt 16' der Queröffnung 16 im Bereich der Ebene der außenliegenden Stirnseite 19'' der Kappe 19. Da die in Ruhelage mit ihrem Führungsbund 17 an der Kappe 19 anliegende Kolbenstange 14 unter Krafteinwirkung entsprechend dem Federweg des Federelements 21 also bei Längsverschiebung des Führungsbunds 17 in der Druckstufe im zylindrischen Hohlraum 18' des Aufnahmeteils 18- gegen dessen Boden 18'' verlagerbar ist, erfüllt die mit der Kappe 19 des Aufnahmeteils 18 zusammenwirkende Anlageschulter 17' des Führungsbunds 17 die Funktion einer Totgangverbindung.

Die Wirkungsweise des erfindungsgemäßen Teleskopstoßdämpfers 1 ist folgende:

Überfährt ein mit dem erfindungsgemäßen Teleskopstoßdämpfer 1 ausgerüstetes Motorrad eine Fahrbahnerhöhung, so wird der äußere, mit dem Rad des Motorrads in Verbindung stehende Zylinder 2 gegen die Wirkung der Druckfeder 10 in Pfeilrichtung D über den inneren, am Fahrzeugaufbau angebrachten Zylinder 3 geschoben und damit in der Druckstufe bewegt. Wenn der äußere Zylinder 2 nicht mehr durch Krafteinwirkung in Pfeilrichtung D bewegt wird, so wird er durch die Wirkung der in der Druckstufe zusammengedrückten Druckfeder 10 in Pfeilrichtung Z - da der innere Zylinder 3 am Fahrzeugaufbau befestigt ist - und damit in der Zugstufe verschoben.

Beim Verschieben des äußeren Zylinders 2 in Pfeilrichtung D (Druckstufe), also beim Einfedern des Teleskopstoßdämpfers 1, gelangt das sich im Arbeitsraum 13 des äußeren Zylinders 2 befindende Hydrauliköl über den Dämpfungseinsatz 8 in den Arbeitsraum 6 des inneren Zylinders 3. Nachdem der äußere Zylinder 2 und der innere Zylinder 3 unterschiedliche Durchmesser aufweisen, haben ihre Arbeitsräume 13 und 6 unterschiedliche Volumenänderungen in Bezug auf den Verschiebeweg. Daher wird das beim Ineinanderschieben der Zylinder 2 und 3 (Druckstufe - Pfeilrichtung D) sich im Arbeitsraum 13 mit dem größeren Innendurchmesser befindende Hydrauliköl außer in den Arbeitsraum 6 auch über die in der Kolbenstange 14 vorgesehene Queröffnung 16 in den Hohlraum 15 der Kolbenstange 14 und von diesem in die Federkammer 9 des inneren Zylinders 3 eingespeist. Bei erhöhter, über das durchschnittlich angenommene Gewicht eines Motorradfahrers hinausgehender Belastung eines Motorrads oder wenn diese eine größere Fahrbahnerhöhung überfährt, wird die im inneren Zylinder 3 angeordnete Druckfeder 10 durch die Verschiebung des äußeren Zylinders 2 in Pfeilrichtung D (Druckstufe) höher vorgespannt, wodurch die Kolbenstange 14 gegen die Wirkung des Federelements 21 - dessen Federkraft hierfür entsprechend abgestimmt ist - in Pfeilrichtung a abwärts verlagt und dadurch die Queröffnung 16 teilweise von der Kappe 19 überdeckt wird. Da sich somit die Größe des Durchflußquerschnitts der Queröffnung 16 entsprechend der Größe der Motorradbelastung bzw. der Einfederung des äußeren Zylinders 2 verändert, wird die Queröffnung 16 durchfließende Ölstrom entsprechend der Größe des jewils vorhandenen Durchflußquerschnitts - der bei großer Motorradbelastung klein, bei geringerer Motorradbelastung bzw. Einschiebung des äußeren Zylinders 2 dagegen größer istgedrosselt, wodurch der Teleskopstoßdämpfer 1 zusätzlich zur Wirkung des Dämpfungseinsatzes 8 lastabhängig gedämpft einfedert (Pfeilrichtung D). Nachdem bei zunehmender Motorradbelastung bzw. beim Übergahren einer Fahrbahnerhöhung die Federkraft des Federelements 21 bei entsprechend verwendeten Federn ansteigt und gleichzeitig der Durchflußquerschnitt der Queröffnung 16 verkleinert wird, ist ein progressiv wirkendes lastabhängiges Dämpfungssystem geschaffen. Die Längserstrechung der Queröffnung 16 ist jedoch so bemessen, daß bei höchstzulässiger Mototbelastung bzw. Einfederung des äußeren Zylinders 2 noch ein freier, von der Kappe 19 nicht überdechter Durchflußquerschnitt verbleibt.

Nach Entfernen der zusätzlichen Motorradsbelastung bzw. auf ebener Fahrbahn wird die Kolbenstange 14 durch das Federelement 21 entgegen der Pfeilrichtung a in ihre in der Zeichnung veranschaulichte Ausgangslage zurückverlagert. Beim Auseinanderschieben der Zylinder 2 und 3 durch die Druckfeder 10 (Zugstufe - Pfeilrichtung Z) strömt das sich in der Federkammer 9 befindende Hydrauliköl über den Hohlraum 15 der Kolbenstange 14, sowie die Queröffnung 16 in den Arbeitsraum 13 des äußeren Zylinders 2 zurück.

## Patentansprüche

1. Hydraulischer Teleskopstoßdämpfer (1) für ein Kraftfahrzeug insbesondere für ein Motorrad, mit zwei teleskopierbaren Zylindern (2, 3), von denen der äußere Zylinder (2) in seinem Arbeitsraum (13) mit einer sich am Boden (2') abstützenden hohlen (15) und wenigstens eine Queröffnung (16) aufweisenden Kolbenstange (14) versehen ist, an deren freiem Endabschnitt sich ein im Arbeitsraum (6) des inneren Zylinders (3) angeordneter Kolben (7) befindet, an dem sich eine im inneren Zylinder (3) angeordnete Druckfeder (10) abstützt, wobei bei Relativverschiebungen der beiden Zylinder (2, 3) das sich in ihren Arbeitsräumen (6, 13) befindende Hydrauliköl über einen im inneren Zylinder (3) angeordneten Dämpfungseinsatz (8), sowie den Hohlraum (15) der Kolbenstange (14) strömt, und ferner am äußeren Zylinder (2) eine die Kolbenstange (14) mindestens im Bereich der Queröffnung (16) umgebende Abdeckung (19) angebracht ist, welche diese in Ruhelage der Kolbenstange (14) nicht oder nur unwesentlich überdeckt, während die Queröffnung bei fortschreitendem Ineinanderschieben der Zylinder (2 u. 3) (in der Druckstufe) zunehmend von der Abdeckung (19) überdeckt wird, dadurch gekennzeichnet, daß die Kolbenstange (14) über eine Totgangverbindung mit dem Boden (2') des äußeren Zylinders (2) verbunden ist und sie sich gegen den Boden unter Zwischenlage eines Federelements (21) abstützt, und daß die Abdeckung starr mit dem äußeren Zylinder verbunden ist

2. Hydraulischer Teleskopstoßdämpfer nach Anspruch 1, dadurch gekennzeichnet, daß die Queröffnung (16) als ein sich in Längsrichtung der Kolbenstange (14) erstreckendes Langloch ausgebildet ist.

3. Hydraulischer Teleskopstoßdämpfer nach Anspruch 1, dadurch gekennzeichnet, daß am freien Endabschnitt der Kolbenstange (14) ein radialgerichteter Führungsbund (17) ausgebildet ist, der im zylindrischen Hohlraum (18,) eines am Boden (2') des äußeren Zylinders (2) befestigten, topfförmigen Aufnahmeteils (18) längsverschiebbar angeordnet ist, wobei auf dieses eine die Abdeckung bildende Kappe (19) aufgeschraubt ist, deren zentrische Durchgangsöffnung (19') die Kolbenstange flüssigkeitsdicht umgibt.

4. Hydraulischer Teleskopstoßdämpfer nach Anspruch 3, dadurch gekennzeichnet, daß die Längserstreckung des Führungsbunds (17) derart bemessen ist, daß bei am Boden (18'') des topfförmigen Aufnahmeteils (18) aufliegendem und gegen die freie Stirnseite (14') der Kolbenstange (14) wirkenden Federelement (21), seine dem Kolben (7) zugewandte Anlageschulter (17') gegen die Kappe (19) gedrückt wird und dabei der untenliegende Randabschnitt (16') der Queröffnung (16) im Bereich der Ebene der außenliegenden Stirnseite (19'') der Kappe liegt.

## Claims

1. An hydraulic telescopic shock absorber (1) for a motor vehicle, especially for a motor cycle, having two telescopable cylinders (2, 3) of which the outer cylinder (2) is provided in its working chamber (13) with a hollow (15) piston rod (14) having at least one transverse opening (16) and supported on the lower end (2'), on the free end section of which rod there is located a piston (7) arranged in the working chamber (6) of the inner cylinder (3), on which piston there is supported a compression spring (10) arranged in the inner cylinder (3) so that, in the case of relative displacements of the two cylinders (2, 3), the hydraulic oil contained in their working chambers (6, 13) flows by way of a damping insert (8) arranged in the inner cylinder (3) and by way of the cavity (15) of the piston rod (14), and, further, on the outer cylinder (2) there is a covering (19) surrounding the piston rod (14) at least in the region of the transverse opening (16), which covering covers the transverse opening (16) not at all or only to a negligible extent when the piston rod (14) is in the rest position, while the transverse opening is increasingly covered by the covering (19) as the telescoping of the cylinders (2 and 3) progresses (in the pressure stage), characterised in that the piston rod (14) is connected through a lost motion connection with the lower end (2') of the outer cylinder (2) and is supported against the lower end with the interposition of a spring element (21), and that the covering is rigidly connected to the outer cylinder.

2. An hydraulic telescopic shock absorber according to Claim 1, characterised in that the transverse opening (16) is formed as a slot extending in the longitudinal direction of the piston rod (14).

3. An hydraulic telescopic shock absorber according to Claim 1, characterised in that on the free end section of the piston rod (14) there is formed a radially-directed guide collar (17) which is longitudinally displaceably arranged in the cylindrical cavity (18') of a pot-shaped reception part (18) secured to the lower end (2') of the outer cylinder (2), while upon this part there is screwed a cap (19) forming the covering, the central passage opening (19') of which surrounds the piston rod in a fluid-tight manner.

4. An hydraulic telescopic shock absorber according to Claim 3, characterised in that the longitudinal extent of the guide collar (17) is so dimensioned that, when the spring element (21) is resting on the lower end (18'') of the pot-shaped reception part (18) and acting against the free end face (14') of the piston rod (14), the abutment shoulder (17'), facing the piston (7), of the guide collar (17) is pressed against the cap (19) and the downwardly-situated edge section (16') of the transverse opening (16) thereby lies in the region of the plane of the externally-located end face (19'') of the cap.

## Revendications

1°) Amortisseur hydraulique télescopique (1) pour un véhicule à moteur, en particulier pour une motocyclette, avec deux cylindres susceptibles de coulisser télescopiquement (2, 3), le cylindre extérieur (2) étant muni dans sa chambre de travail (13) d'une tige de piston (14), creuse (15), prenant appui sur le fond (2') de la chambre de travail et munie d'au moins un orifice transversal (16), tige de piston à l'extrémité libre de laquelle se trouve un piston (7) disposé dans la chambre de travail (6) du cylindre interne (3) et sur lequel prend appui un ressort de pression (10) disposé dans le cylindre interne (3), cependant que, lors du déplacement relatif des deux cylindres (2, 3), l'huile hydraulique se trouvant dans leurs chambres de travail (6, 13) s'écoule par l'intermédiaire d'une garniture d'amortissement (8) disposée dans le cylindre interne (3) ainsi que par l'intermédiaire de l'espace creux (15) de la tige de piston (14), et un recouvrement (19) entourant la tige de piston (14) au moins dans la zone de l'orifice transversal (16) étant prévu dans le cylindre externe (2), ce recouvrement ne recouvrant pas, ou seulement de façon insignifiante, cet orifice transversal dans la position de repos de la tige de piston (14), tandis que l'orifice transversal est recouvert progressivement par le recouvrement (19) lorsque le coulissement l'un dans l'autre des cylindres (2 et 3) progresse lors de la mise sous pression de l'amortisseur, amortisseur caractérisé en ce que la tige de piston (14) est reliée au fond (2') du cylindre externe (2) par une liaison de course morte, et qu'elle prend appui contre ce fond avec interposition d'un élément élastique (21), tandis que le recouvrement (19) est solidaire du cylindre externe.

2°) Amortisseur hydraulique télescopique selon la revendication 1, caractérisé en ce que l'orifice transversal (16) revêt la forme d'une boutonnière s'étendant dans la direction longitudinale de la tige de piston (14).

3°) Amortisseur hydraulique télescopique selon la revendication 1, caractérisé en ce qu'à l'extrémité libre de la tige de piston (14), il est prévu un collet de guidage radial (17) susceptible de coulisser longitudinalement dans l'espace creux cylindrique (18') d'une pièce-réceptrice en forme de godet (18) fixée sur le fond (2') du cylindre externe (2), tandis que sur cette pièce-réceptrice (18) est vissé un capot (19) constituant le recouvrement et dont l'orifice central de passage (19') entoure de façon étanche au liquide la tige du piston.

4°) Amortisseur hydraulique télescopique selon la revendication 3, caractérisé en ce que la longueur du collet de guidage (17) est dimensionnée de façon que, lorsque l'élément élastique (21) vient s'appliquer sur le fond (18") de la pièce-réceptrice (18) en forme de godet et agit contre la face frontale (14') de la tige de piston (14), son épaulement (17') tourné vers le piston (7) est poussé contre le capot (19) et qu'alors la partie inférieure (16') du bord de l'orifice transversal (16) se trouve au voisinage du plan de la face frontale (19") du capot, placée à l'extérieur.

0 114 623